# EUROPEAN PATENT SPECIFICATION

(11) **EP 4 048 100 B1**
(45) Date of publication and mention of the grant of the patent: **29.11.2023**
(21) Application number: 20799806.3
(22) Date of filing: 23.10.2020
(51) Int. Cl.: A24F 40/50, A24F 40/90, H02J 7/00

(54) **APPARATUS FOR A NON-COMBUSTIBLE AEROSOL PROVISION SYSTEM**
VORRICHTUNG FÜR EIN EIN NICHT BRENNBARES AEROSOL ERZEUGUNGSSYSTEM
APPAREIL POUR UN SYSTÈME DE FOURNITURE D' UN AEROSOL NON COMBUSTIBLE

(30) Priority: 25.10.2019 GB 201915511
(43) Date of publication of application: 31.08.2022
(73) Proprietor: Nicoventures Trading Limited, London WC2R 3LA (GB)
(72) Inventor: VINTOLA, Tomi, London, Greater London WC2R 3LA (GB); MULLIN, Martin, London, Greater London WC2R 3LA (GB); ANGELL, Terry, London, Greater London WC2R 3LA (GB)
(74) Representative: Whiting, Gary
(86) International application number: PCT/GB2020/052684
(87) International publication number: WO 2021/079139

(56) References cited:
- EP-A1- 2 701 268
- WO-A1-2019/077707
- WO-A1-2019/082249
- JP-A- 2019 022 494
- US-A1- 2016 374 397
- US-A1- 2017 303 597

## Description

### Technical Field

The present specification relates to an arrangement for charging a battery, such as a battery of an aerosol provision system.

### Background

Smoking articles, such as cigarettes, cigars and the like burn tobacco during use to create tobacco smoke. Attempts have been made to provide alternatives to these articles by creating products that release compounds without combusting. For example, a range of non-combustible aerosol provision systems exist that release compounds from an aerosolisable material without combusting the aerosolisable material, such as electronic cigarettes, tobacco heating products, and hybrid systems to generate aerosol using a combination or aerosolisable materials.

US 2017/303597 describes an electronic smoking apparatus comprising control circuitry, driving circuitry, charging circuitry and a battery. The apparatus is operable in a smoking mode or a charging mode. Charging current flows from an external charging power source to the battery through a switchable conductive path when the electronic smoking apparatus operates in the charging mode.

### Summary

The invention is defined in the appended claims.

In a first aspect, this specification describes an apparatus for a non-combustible aerosol provision system comprising: a charging unit configured to charge a battery of said aerosol provision system; a circuit comprising a control module, wherein the control module outputs a first control signal having a charge enable state and a charge disable state; and a protection module configured to decouple the circuit from said battery when the battery voltage is below a first threshold level (e.g. 2.5V), wherein the charging unit is configured to charge the battery unless the first control signal has the charge disable state. The control module may have an MPU, CPU or similar module. The protection module may be implemented using a protection circuit module (PCM).

The protection module is configured to prevent the battery from being charged when the battery voltage is below a second threshold level (e.g. 0.9V or 1V), wherein the second threshold level is lower than the first threshold level. This functionality may be based on the internal implementation of a PCM implementing the protection module.

The protection circuit may be configured to permanently decouple the circuit from said battery when the battery voltage is below a/the second threshold level, wherein the second threshold level is lower than the first threshold level. This functionality may be based on the internal implementation of a PCM implementing the protection module.

The control module may be configured to output a charge current control signal. Furthermore, a charging current output by the charging unit to charge the battery may be dependent, at least in part, on the charge current control signal. The charging current output may be set to a default level in the absence of the charge current control signal (i.e. if the charge control signal output of the control module is "floating"). The default level may be a lowest current level (e.g. for maximum safety). In one implementation, the default level is 70mA. The charge current control signal may be dependent, at least in part, on a temperature of said battery.

The control module may be configured to set the first control signal to the charge enable state or the charge disable state based, at least in part, on a determined (e.g. measured) temperature of said battery.

The control module may be configured to set the first control signal to the charge disable state when the apparatus is used to generate an aerosol.

Some embodiments further comprise a resistor arrangement, wherein the resistor arrangement is configured to receive the first control signal from the control module and to receive a constant current source signal from the charging unit, wherein the constant current source signal generates a voltage within the resistor arrangement dependent on said first control signal, said voltage being used, by said charging unit, to determine whether to allow charging of said battery. The resistor arrangement may comprise: a first resistor having a first terminal configured to receive the constant current source signal and a second terminal connected to ground; and a second resistor having a first terminal configured to receive the constant current source signal and a second terminal configured to receive the first control signal. In one example implementation, the first and second resistors are 10kΩ, and 330Ω, resistor respectively, however this is not essential to all embodiments. The resistors may be selected to provide a given voltage (e.g. of the order of at least 150mV).

Some embodiments further comprise a regulator configured to regulate an operational voltage provided to said circuit. The operation voltage may provide a fixed voltage to the circuit. In one embodiment, the operational voltage is 2.5V.

The control module may be configured to control an aerosol generation circuit of said apparatus.

In some embodiments, the apparatus further comprises the said battery.

In a second aspect, this specification describes a method comprising: decoupling (e.g. using a protection module, such as a protection circuit module (PCM)) a circuit from a battery of a non-combustible aerosol provision system in the event that the battery voltage is below a first threshold level (e.g. 2.5V), wherein the circuit comprises a control module; using said control module to generate a first control signal, the first control signal having a charge enable state and a charge disable state; and charging (e.g. using a charging unit) the battery unless the first control signal has the charge disable state. The control signal may have neither the charge enable state nor the charge disable state in the event that the circuit is decoupled from the battery.

The method further comprises preventing the battery from being charged when the battery voltage is below a second threshold level (e.g. 0.9V or 1V), wherein the second threshold level is lower than the first threshold level.

The method may further comprise permanently decoupling the circuit from said battery in the event that the battery voltage is below a second threshold level, wherein the second threshold level is lower than the first threshold level.

The method may further comprise: generating a voltage within a resistor arrangement dependent on said first control signal; and determining whether to charge the battery depending on said generated voltage.

The method may comprise providing a charge current control signal. Furthermore, a charging current for charging the battery may be dependent, at least in part, on the charge current control signal. The method may comprise setting the charging current output to a default level in the absence of the charge current control signal (i.e. if the charge control signal output of the control module is "floating"). The default level may be a lowest current level (e.g. for maximum safety). In one implementation, the default level is 70mA.

The charge current control signal may be dependent, at least in part, on a temperature of said battery.

In a third aspect, this specification describes a non-combustible aerosol provision system (e.g. for generating an aerosol from an aerosolisable material), the aerosol provision system comprising an apparatus including any of the features of the first aspect described above or configured to operate in accordance with any of the features of the second aspect described above. The aerosol provision system may be configured to receive a removable article comprising an aerosol generating material.

In a fourth aspect, this specification describes computer-readable instructions which, when executed by computing apparatus, cause the computing apparatus to perform any method as described with reference to the second aspect.

In a fifth aspect, this specification describes a kit of parts comprising an article for use in a non-combustible aerosol generating system, wherein the non-combustible aerosol generating system comprising an apparatus including any of the features of the first aspect described above or configured to operate in accordance with any of the features of the second aspect described above. The article may, for example, be a removable article comprising an aerosol generating material.

In a sixth aspect, this specification describes a computer program comprising instructions for causing an apparatus to perform at least the following: decouple a circuit from a battery of a non-combustible aerosol provision system in the event that the battery voltage is below a first threshold level; generate a first control signal, the first control signal having a charge enable state and a charge disable state; and charge the battery unless the first control signal has the charge disable state.

### Brief Description of the Drawings

Example embodiments will now be described, by way of example only, with reference to the following schematic drawings, in which:
FIG. 1 is a block diagram of a system in accordance with an example embodiment;
FIG. 2 is a flow chart showing an algorithm in accordance with an example embodiment
FIG. 3 is a block diagram of a system in accordance with an example embodiment;
FIG. 4 is a flow chart showing an algorithm in accordance with an example embodiment;
FIG. 5 is a flow chart showing an algorithm in accordance with an example embodiment;
FIG. 6 is a block diagram of a circuit in accordance with an example embodiment;
FIG. 7 is a flow chart showing an algorithm in accordance with an example embodiment;
FIG. 8 is a flow chart showing an algorithm in accordance with an example embodiment;
FIG. 9 is a block diagram of a circuit in accordance with an example embodiment; and
FIG. 10 is a block diagram of a non-combustible aerosol provision device in accordance with an example embodiment.

### Detailed Description

As used herein, the term "delivery system" is intended to encompass systems that deliver a substance to a user, and includes:
combustible aerosol provision systems, such as cigarettes, cigarillos, cigars, and tobacco for pipes or for roll-your-own or for make-your-own cigarettes (whether based on tobacco, tobacco derivatives, expanded tobacco, reconstituted tobacco, tobacco substitutes or other smokable material);
non-combustible aerosol provision systems that release compounds from an aerosolisable material without combusting the aerosolisable material, such as electronic cigarettes, tobacco heating products, and hybrid systems to generate aerosol using a combination of aerosolisable materials;
articles comprising aerosolisable material and configured to be used in one of these non-combustible aerosol provision systems; and
aerosol-free delivery systems, such as lozenges, gums, patches, articles comprising inhalable powders, and smokeless tobacco products such as snus and snuff, which deliver a material to a user without forming an aerosol, wherein the material may or may not comprise nicotine.

According to the present disclosure, a "combustible" aerosol provision system is one where a constituent aerosolisable material of the aerosol provision system (or component thereof) is combusted or burned in order to facilitate delivery to a user.

According to the present disclosure, a "non-combustible" aerosol provision system is one where a constituent aerosolisable material of the aerosol provision system (or component thereof) is not combusted or burned in order to facilitate delivery to a user.

In embodiments described herein, the delivery system is a non-combustible aerosol provision system, such as a powered non-combustible aerosol provision system.

In one embodiment, the non-combustible aerosol provision system is an electronic cigarette, also known as a vaping device or electronic nicotine delivery system (END), although it is noted that the presence of nicotine in the aerosolisable material is not a requirement.

In one embodiment, the non-combustible aerosol provision system is a tobacco heating system, also known as a heat-not-burn system.

In one embodiment, the non-combustible aerosol provision system is a hybrid system to generate aerosol using a combination of aerosolisable materials, one or a plurality of which may be heated. Each of the aerosolisable materials may be, for example, in the form of a solid, liquid or gel and may or may not contain nicotine. In one embodiment, the hybrid system comprises a liquid or gel aerosolisable material and a solid aerosolisable material. The solid aerosolisable material may comprise, for example, tobacco or a non-tobacco product.

Typically, the non-combustible aerosol provision system may comprise a non-combustible aerosol provision device and an article for use with the non-combustible aerosol provision system. However, it is envisaged that articles which themselves comprise a means for powering an aerosol generating component may themselves form the non-combustible aerosol provision system.

In one embodiment, the non-combustible aerosol provision device may comprise a power source and a controller. The power source may be an electric power source or an exothermic power source. In one embodiment, the exothermic power source comprises a carbon substrate which may be energised so as to distribute power in the form of heat to an aerosolisable material or heat transfer material in proximity to the exothermic power source. In one embodiment, the power source, such as an exothermic power source, is provided in the article so as to form the non-combustible aerosol provision.

In one embodiment, the article for use with the non-combustible aerosol provision device may comprise an aerosolisable material, an aerosol generating component, an aerosol generating area, a mouthpiece, and/or an area for receiving aerosolisable material.

In one embodiment, the aerosol generating component is a heater capable of interacting with the aerosolisable material so as to release one or more volatiles from the aerosolisable material to form an aerosol. In one embodiment, the aerosol generating component is capable of generating an aerosol from the aerosolisable material without heating. For example, the aerosol generating component may be capable of generating an aerosol from the aerosolisable material without applying heat thereto, for example via one or more of vibrational, mechanical, pressurisation or electrostatic means.

In one embodiment, the aerosolisable material may comprise an active material, an aerosol forming material and optionally one or more functional materials. The active material may comprise nicotine (optionally contained in tobacco or a tobacco derivative) or one or more other non-olfactory physiologically active materials. A non-olfactory physiologically active material is a material which is included in the aerosolisable material in order to achieve a physiological response other than olfactory perception.

The aerosol forming material may comprise one or more of glycerine, glycerol, propylene glycol, diethylene glycol, triethylene glycol, tetraethylene glycol, 1,3-butylene glycol, erythritol, meso-Erythritol, ethyl vanillate, ethyl laurate, a diethyl suberate, triethyl citrate, triacetin, a diacetin mixture, benzyl benzoate, benzyl phenyl acetate, tributyrin, lauryl acetate, lauric acid, myristic acid, and propylene carbonate.

The one or more functional materials may comprise one or more of flavours, carriers, pH regulators, stabilizers, and/or antioxidants.

In one embodiment, the article for use with the non-combustible aerosol provision device may comprise aerosolisable material or an area for receiving aerosolisable material. In one embodiment, the article for use with the non-combustible aerosol provision device may comprise a mouthpiece. The area for receiving aerosolisable material may be a storage area for storing aerosolisable material. For example, the storage area may be a reservoir. In one embodiment, the area for receiving aerosolisable material may be separate from, or combined with, an aerosol generating area.

Aerosolisable material, which also may be referred to herein as aerosol generating material, is material that is capable of generating aerosol, for example when heated, irradiated or energized in any other way. Aerosolisable material may, for example, be in the form of a solid, liquid or gel which may or may not contain nicotine and/or flavourants. In some embodiments, the aerosolisable material may comprise an "amorphous solid", which may alternatively be referred to as a "monolithic solid" (i.e. non-fibrous). In some embodiments, the amorphous solid may be a dried gel. The amorphous solid is a solid material that may retain some fluid, such as liquid, within it.

The aerosolisable material may be present on a substrate. The substrate may, for example, be or comprise paper, card, paperboard, cardboard, reconstituted aerosolisable material, a plastics material, a ceramic material, a composite material, glass, a metal, or a metal alloy.

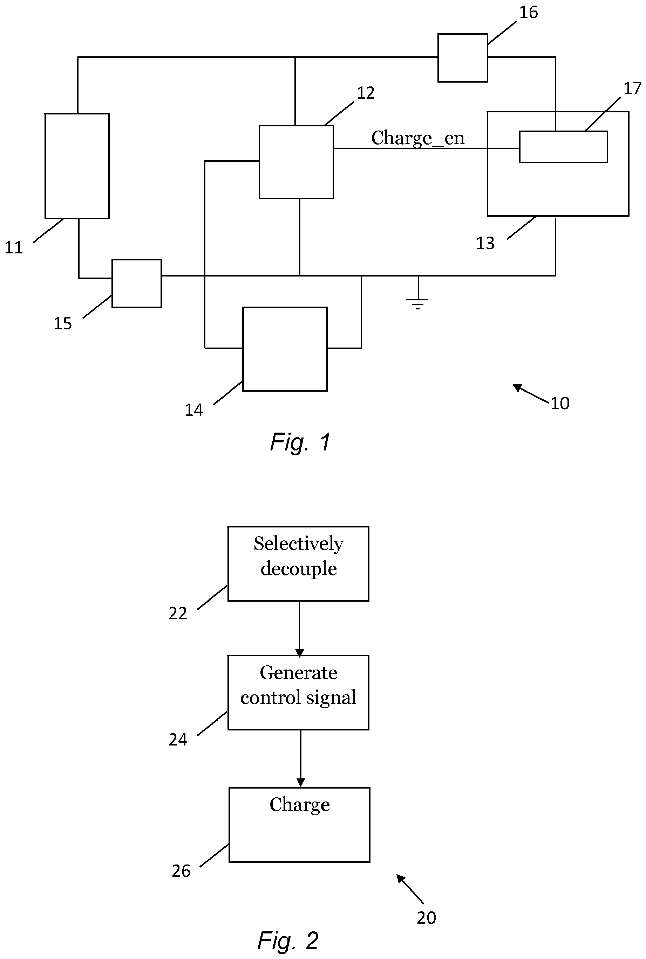

FIG. 1 is a block diagram of a system, indicated generally by the reference numeral 10, in accordance with an example embodiment.

The system 10 comprises a battery 11, a charging unit 12, a circuit 13, a power supply 14, a protection module 15 and a regulator 16. The circuit 13 has a control module 17 (such as an MCU, CPU or some other processor). The protection module 15 may be a protection circuit module (PCM).

The circuit 13 may form part of a non-combustible aerosol provision system. The system 10 enables the control module 17 to control charging of the battery 11, such that the battery 11 can be used to power the circuit 13 (and can be used to power the aerosol provision system).

The power supply 14 may be an external power supply that may be temporarily connected to the charging unit 12 to enable charging of the battery 11. The power supply 14 may be attached to the system 10 using a connector, such as a USB connector. Many alternative connector arrangements and many other charging arrangements will be readily apparent to persons skilled in the art.

The charging unit 12 is configured to charge the battery 11. The control module 17 provides a control signal (charge_en) to the charging unit 12, wherein the control signal has a charge enable state and a charge disable state. As discussed in detail below, the charging unit 12 is configured to charge the battery 11 unless the control signal is in the charge disable state. Thus, if the first control signal is "floating" (such that the first control signal has neither the charge enable state nor the charge disable state), then the charging unit 12 is still configured to charge the battery 11.

The protection module 15 is provided to decouple the power source (the battery 11) from the rest of the system 10 (in particular the circuit 13) in certain defined conditions. These may include one or more of: an overvoltage condition, an undervoltage condition and an overcurrent condition. In one example embodiment, the protection module 15 decouples the circuit 13 from the battery 11 in the event that the battery voltage is below a first threshold voltage. This may be provided a safety feature, since using the battery 11 to power an aerosol provision system when the battery voltage is too low can cause problems.

The regulator 16 provides a fixed voltage to part of the circuit 13. For example, in one example embodiment, the circuit 13 operates at 2.5V, with that voltage being provided by the regulator 16.

The first threshold voltage at which the protection module 15 decouples the battery 11 from the circuit 13 may be set at about 2.5V. As a result of the decoupling, the rate at which current from the battery will be drained will be reduced, thereby making it less likely that the battery will fall below a second threshold voltage below which the battery may be permanently decoupled from the circuit 13 (as discussed further below). Moreover, as noted above, the circuit 13 may operate at 2.5V, thus if the battery voltage provided to the circuit 13 drops below 2.5V (or whatever the relevant operational voltage is), then coupling the battery voltage to the circuit 13 may lead to unstable operation of the circuit.

FIG. 2 is a flow chart showing an algorithm, indicated generally by the reference numeral 20, in accordance with an example embodiment. The algorithm 20 may be implemented by the system 10 described above.

The algorithm 20 starts at operation 22, where the circuit 13 is selectively decoupled from the battery 11 of the system 10. Specifically, the circuit 13 is decoupled (e.g. using the protection circuit 15) from the battery 11 in the event that the battery voltage is below a first threshold voltage level.

At operation 24, a first charge control signal is generated by the circuit 13 (e.g. by the control module 17). As discussed above, the first control signal has a charge enable state and a charge disable state. However, in the event that the circuit is decoupled from the battery (and therefore not powered), the first control signal will be floating, such that the first control signal has neither the charge enable state nor the charge disable state.

At operation 26, the battery 11 is charged (using the charging unit 12) unless the first control signal has the charge disable state. Thus, if the first control signal has the charge enable state, or the first control signal is floating (as discussed above), then the battery 11 may be charged in the operation 26 (provided, of course, that a suitable charging arrangement, such as the power supply 14, is provided).

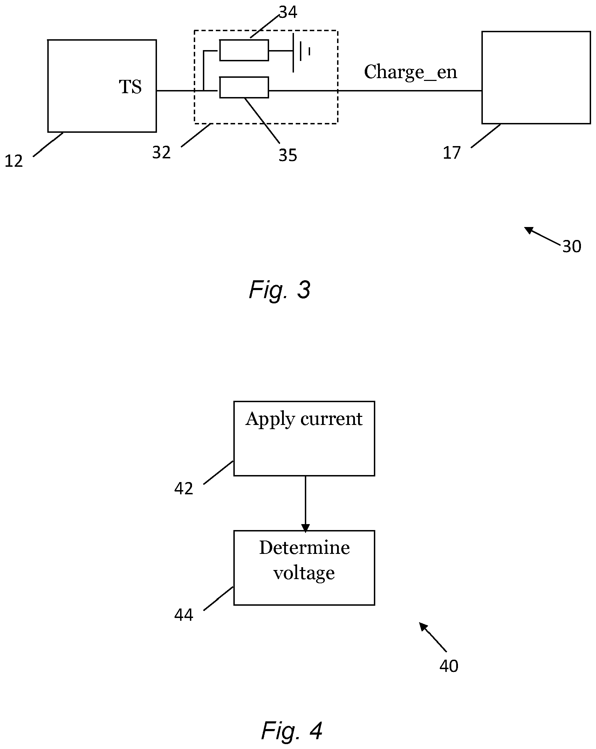

FIG. 3 is a block diagram of a system, indicated generally by the reference numeral 30, in accordance with an example embodiment. The system 30 includes the charging unit 12 and the control module 17 described above. The system 30 further comprises a resistor arrangement 32 provided between the charging unit 12 and the control module 17. The resistor arrangement 32 is configured to receive the first control signal (charge_en) from the control module 17 and to receive a constant current source signal from the charging unit 12 (e.g. from a TS pin of the charging unit 12, as shown in FIG. 3). As discussed further below, the constant current source signal can be used to generate a voltage within the resistor arrangement 32 that is dependent on the first control signal (charge_en), that generated voltage being used, by the charging unit 12, to determine whether to allow charging of the battery 11 described above.

In the example system 30, the resistor arrangement 32 comprises: a first resistor 34 having a first terminal connected to the TS pin of the charging unit 12 (i.e. to the constant current source) and a second terminal connected to ground; and a second resistor 35 having a first terminal connected to the TS pin of the charging unit 12 (i.e. to the constant current source) and a second terminal connected to the first control signal (charge_en). In one example implementation, the first resistor 34 has a resistance of 10kΩ, and the second resistor 35 has a resistance of 330Ω, (of course, these resistors could have different values in alternative embodiments).

FIG. 4 is a flow chart showing an algorithm, indicated generally by the reference numeral 40, in accordance with an example embodiment. The algorithm 40 may be implemented by the system 30 described above.

The algorithm 40 starts at operation 41, where a constant current is output by the TS terminal of the charging unit 12. In one example embodiment, the constant current is 50µA.

At operation 44, a voltage at the TS terminal of the charging unit 12 is determined. On the basis of the determined voltage, a determination is made regarding the state of the charge_en control signal. It should be noted that there may not be a "determination" of the state of the charge_en control signal; rather, action may occur simply based on the voltage generated across the resistor arrangement 32.

In the example described above, if the charge_en signal is floating, then the 50µA current flows through the 10kΩ, resistor to ground, resulting in a voltage of 500mV at the TS pin of the charging unit 12. This voltage is sufficient to enable the charging unit 12, such that the battery can be charged in the event that the circuit 13 is decoupled from the battery (see operation 22 above), such that the battery can be charged (see operation 26 above).

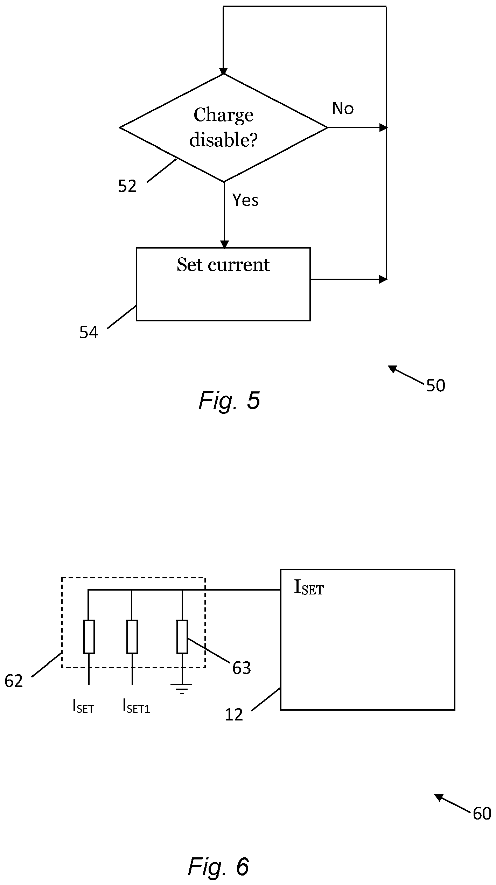

FIG. 5 is a flow chart showing an algorithm, indicated generally by the reference numeral 50, in accordance with an example embodiment. The algorithm 50 is an example implementation of the operation 26 of the algorithm 20 described above.

The algorithm 50 starts at operation 52, where a determination is made regarding whether the state of the control signal (charge_en) received at the charging unit 12 from the control module 17 is in the charge disable state. If the control signal has the charge disable state, then the operation 52 is simply repeated; otherwise (if the control signal has the charge enable state or is floating), the algorithm moves to operation 54. As noted above, there may not be a "determination" of the state of the charge_en control signal; rather, action may occur simply based on the voltage generated across the resistor arrangement 32.

At operation 54, a charging current output by the charging unit 12 to charge the battery 11 is set. As described below, the charging current output by the charging unit 12 to charge the battery 11 may be dependent, at least in part, on a charge current control signal I_{SET}.

The charging current output may be set in operation 54 to a default level in the absence of a charge current control signal (e.g. I_{SET}). For example, the default level may be a low level (e.g. 70mA) that may be used in a default condition. The default level may, for example, be used if the control module 17 is decoupled from the battery 11.

FIG. 6 is a block diagram of a circuit, indicated generally by the reference numeral 60, in accordance with an example embodiment. The circuit 60 comprises the charging unit 12 described above, which charging unit includes an input pin I_{SET}. The voltage received at the input pin I_{SET} may be used to determine the charging current applied in the operation 26 of the algorithm 20.

The voltage at the input pin I_{SET} may be dependent on the state of two control signals: I_{SET} and I_{SET1}. Those control signals may be provided to a resistor arrangement 62. The control signals I_{SET} and I_{SET1} may be provided by the control module 17, such that the control module 17 may set whether charging is enabled by setting the first control signal (charge_en) and, if charging is enabled, may set the charging level by setting the control signals I_{SET} and I_{SET1}. Of course, as noted above, the control module 17 may be decoupled from the battery 11 such that the control signals I_{SET} and I_{SET1} may, in some circumstances, be floating.

In one example embodiment, the charge current is set in the operation 26 in accordance with the following logic:
- If I_{SET} and I_{SET1} are floating, the charge current is set to a low level (e.g. 70mA). This state may readily be detected by virtue of a grounded resistor 63 of the resistor arrangement 62.
- If I_{SET} is floating and I_{SET1} is low, the charge current is set to a medium level (e.g. 175mA).
- If I_{SET} is low and I_{SET1} is floating, the charge current is set to a high level (e.g. 700mA).

Of course the number of options described above, and the parameters (e.g. current levels) of those options are provided by way of example only; many variants are possible.

Alternatively, or in addition, to the algorithm 50, the charge current output may be dependent, at least in part, on a temperature of the battery 11. For example, a negative temperature coefficient resistor (NTC) may be provided as part of a battery temperature monitoring algorithm.

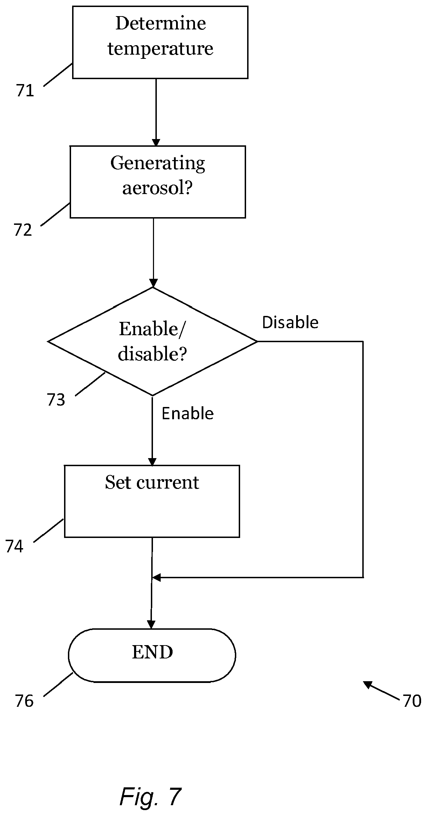

FIG. 7 is a flow chart showing an algorithm, indicated generally by the reference numeral 70, in accordance with an example embodiment. The algorithm 70 may, for example, be implemented by the control module 17.

The algorithm 70 starts at operation 71, where a temperature of operation is determined (e.g. measured). For example, the operation 71 may determine the temperature of the battery 11. The operation 71 may be implemented in many ways, for example using a thermocouple or an NTC resistor.

At operation 72 of the algorithm 70, it is determined whether the system 10 is being used to generate an aerosol. For example, a determination may be made regarding whether a user is activating the device (e.g. taking a puff).

At operation 73 of the algorithm 70, a decision is taken regarding whether charging of the battery 11 should be enabled or disabled. For example, if the temperature (e.g. of the battery) is high (as determined in operation 71), then charging may be disabled. Alternatively, or in addition, if the system is generating an aerosol (as determined in operation 72), then charging may be disabled. Otherwise, charging of the battery may be enabled. Of course, other factors (instead of, or in addition to, one or more of the factors discussed with reference to operations 71 and 72) may be taken into account when determine whether or not to enable battery charging.

If battery charging is disabled in the operation 73, then the first control signal discussed above is set to the charge disable state and the algorithm 70 terminates at operation 76. If the battery charging is enabled in the operation 73, then said first control signal is set to the charge enable state and the algorithm 70 moves to operation 74, where the current charging level is set.

The current charging level may be set in operation 74 in a number of ways (and may be implemented by setting the control signals I_{SET} and I_{SET1}, as discussed above). For example, the current charging level may be dependent (at least in part) on the temperature of the battery 11. Alternatively, or in addition, the current charging level may be dependent on how long the charging process has been in operation (e.g. the charging level may increase over time). Other factors could also be taken into account.

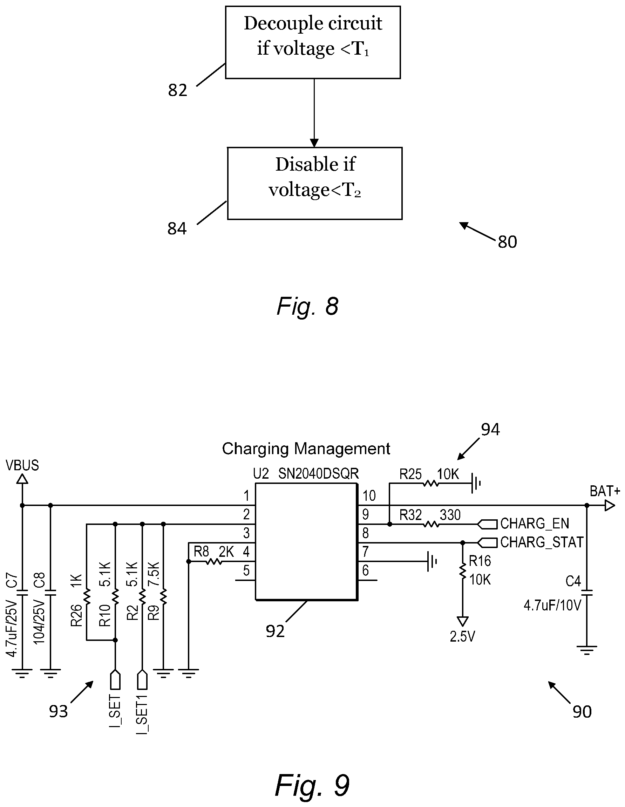

FIG. 8 is a flow chart showing an algorithm, indicated generally by the reference numeral 80, in accordance with an example embodiment.

The algorithm 80 starts at operation 82, where the circuit 13 (and hence the control module 17) is decoupled from the battery 11 in the event that the battery voltage is below a first threshold level (T₁). As discussed above, with the control circuit decoupled, it may still be possible to charge the battery, such that the battery voltage level can rise about the first threshold level. At that stage, the circuit 13 may be coupled to the battery again and normal operation resumed.

At operation 84, the system 10 is disabled in the event that the battery voltage is below a second threshold (T₂). Disabling the system may involve permanently decoupling the circuit 13 from said battery 11 when the battery voltage is below the second threshold level, wherein the second threshold level is lower than the first threshold level. The protection module 15 may be provided with a feature that prevents the battery 11 from being charged in the event that the battery voltage drops below the first threshold, even if a charging source (such as the power supply 14) is attached.

It should be noted that although the algorithm 80 is shown with two separate operations, the operations 82 and 84 may, in practice, be implemented at the same time. Moreover, the operations 82 and 84 may be implemented in an ongoing fashion. In one example embodiment, the operations 82 and 84 are implemented by the protection module 15 on the basis of the battery voltage.

FIG. 9 is a block diagram of a circuit, indicated generally by the reference numeral 90, in accordance with an example embodiment. The circuit 90 includes a charging management module 92. The module 92 is an example of the charging module 12 described above.

The charging management module 92 includes a number of pins, some of which are described below.

A first pin (IN) is configured to receive a voltage V_{BUS} from a power supply (when connected). For example, the power supply 14 described above may be selectively connectable to the first pin (IN).

A second pin (ISET) receives a current setting voltage. A resistor arrangement 93 (similar to the resistor arrangement 62 described above) converts control signals I_{SET} and I_{SET1} (as output, for example, by the control circuit 17) into the current setting voltage at the second pin ISET.

A ninth pin (TS) receives a charging control signal. A resistor arrangement 94 (similar to the resistor arrangement 32 described above) converts a charge_en control signal (as output, for example, by the control circuit 17) into the charging control signal.

A tenth pin (OUT) provides a charging current to a battery (such as the battery 11 described above).

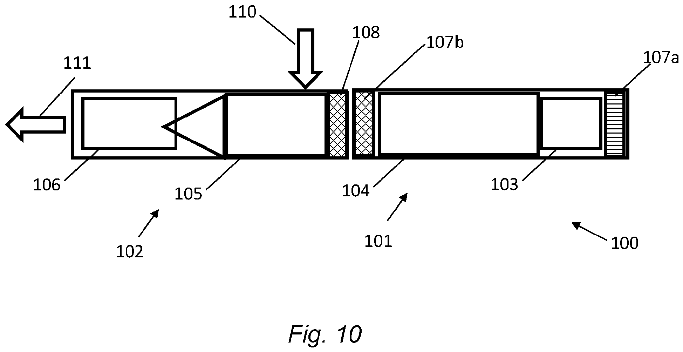

FIG. 10 is a block diagram of a non-combustible aerosol provision device, indicated generally by the reference numeral 100, in accordance with an example embodiment. The device 100 is a modular device, comprising a first part 101 and a second part 102.

The first part 101 of the device 100 includes a control circuit 103 (which may include at least some of the charging unit 12, the circuit 13, the protection module 15, the regulator 16 and the control module 17 described above) and a battery 104 (such as the battery 11 described above). The second part 102 of the device 100 includes a heater 105 and a liquid reservoir 106.

The first part 101 includes a first connector 107a (such as a USB connector). The first connector 107a may enable connection to be made to a power source (such as the power source 14 described above) for charging the battery 104 (e.g. under the control of the control circuit 103).

The first part 101 also includes a second connector 107b that can be removably connected to a first connector 108 of the second part 102.

In the use of the device 100, air is drawn into an air inlet of the heater 105, as indicated by the arrow 110. The heater is used to heat the air (e.g. under the control of the circuit 103). The heated air is directed to the liquid reservoir 106, where an aerosol is generated. The aerosol exits the device at an air outlet, as indicated by the arrow 111 (for example into the mouth of a user of the device 100).

The various embodiments described herein are presented to assist in understanding and teaching the claimed features.

## Claims

1. An apparatus for a non-combustible aerosol provision system comprising:
a charging unit (12) configured to charge a battery (11) of said aerosol provision system;
a circuit (13) comprising a control module (17), wherein the control module outputs a first control signal having a charge enable state and a charge disable state; and
a protection module (15) configured to decouple the circuit from said battery when the battery voltage is below a first threshold level,
wherein:
the charging unit (12) is configured to charge the battery (11) unless the first control signal has the charge disable state; and
the protection module (15) is configured to prevent the battery from being charged when the battery voltage is below a second threshold level, wherein the second threshold level is lower than the first threshold level.

2. An apparatus as claimed in claim 1, wherein the protection circuit (15) is configured to permanently decouple the circuit (13) from said battery when the battery voltage is below the second threshold level.

3. An apparatus as claimed in claim 1 or claim 2, wherein the control module (17) is configured to output a charge current control signal.

4. An apparatus as claimed in claim 3, wherein a charging current output by the charging unit (12) to charge the battery (11) is dependent, at least in part, on the charge current control signal, and wherein the charging current output is optionally set to a default level in the absence of the charge current control signal.

5. An apparatus as claimed in claim 3 or claim 4, wherein the charge current control signal is dependent, at least in part, on a temperature of said battery.

6. An apparatus as claimed in any one of claims 1 to 5, wherein:
the control module (17) is configured to set the first control signal to the charge enable state or the charge disable state based, at least in part, on a determined temperature of said battery; and/or
the control module (17) is configured to set the first control signal to the charge disable state when the apparatus is used to generate an aerosol.

7. An apparatus as claimed in any one of claims 1 to 6, further comprising a resistor arrangement (32), wherein the resistor arrangement is configured to receive the first control signal from the control module and to receive a constant current source signal from the charging unit, wherein the constant current source signal generates a voltage within the resistor arrangement dependent on said first control signal, said voltage being used, by said charging unit, to determine whether to allow charging of said battery, wherein the resistor arrangement optionally comprises:
a first resistor (34) having a first terminal configured to receive the constant current source signal and a second terminal connected to ground; and
a second resistor (35) having a first terminal configured to receive the constant current source signal and a second terminal configured to receive the first control signal.

8. An apparatus as claimed in any one of claims 1 to 7, further comprising a regulator (16) configured to regulate an operational voltage provided to said circuit (13).

9. An apparatus as claimed in any one of claims 1 to 8, wherein the control module (17) is configured to control an aerosol generation circuit of said apparatus.

10. An apparatus as claimed in any one of claims 1 to 9, further comprising said battery.

11. A non-combustible aerosol provision system comprising an apparatus as claimed in any one of claims 1 to 10, wherein the aerosol provision system is optionally configured to receive a removable article comprising an aerosol generating material.

12. A method comprising:
decoupling (22) a circuit (13) from a battery (11) of a non-combustible aerosol provision system in the event that the battery voltage is below a first threshold level, wherein the circuit comprises a control module;
preventing the battery from being charged when the battery voltage is below a second threshold level, wherein the second threshold level is lower than the first threshold level;
using said control module to generate (24) a first control signal, the first control signal having a charge enable state and a charge disable state; and
charging (26) the battery unless the first control signal has the charge disable state.

13. A method as claimed in claim 12, wherein the control signal has neither the charge enable state nor the charge disable state in the event that the circuit is decoupled from the battery.

14. A method as claimed in claim 12 or claim 13, further comprising permanently decoupling the circuit from said battery in the event that the battery voltage is below the second threshold level.

15. A method as claimed in any one of claims 12 to 14, further comprising:
generating a voltage within a resistor arrangement (32) dependent on said first control signal; and
determining whether to charge the battery depending on said generated voltage.

## Patentansprüche

1. Vorrichtung für ein nicht brennbares Aerosol-Bereitstellungssystem, umfassend:
eine Ladeeinheit (12), die konfiguriert ist, um eine Batterie (11) des Aerosol-Bereitstellungssystems zu laden;
eine Schaltung (13), die ein Steuermodul (17) umfasst, wobei das Steuermodul ein erstes Steuersignal mit einem Ladefreigabezustand und einem Ladesperrzustand ausgibt;
und
ein Schutzmodul (15), das konfiguriert ist, um die Schaltung von der Batterie zu entkoppeln, wenn die Batteriespannung unter einem ersten Schwellenwert ist,
wobei:
die Ladeeinheit (12) konfiguriert ist, um die Batterie (11) zu laden, es sei denn, das erste Steuersignal weist den Ladesperrzustand auf; und
das Schutzmodul (15) konfiguriert ist, um zu verhindern, dass die Batterie geladen wird, wenn die Batteriespannung unter einem zweiten Schwellenwert ist, wobei der zweite Schwellenwert niedriger als der erste Schwellenwert ist.

2. Vorrichtung nach Anspruch 1, wobei die Schutzschaltung (15) konfiguriert ist, um die Schaltung (13) permanent von der Batterie zu entkoppeln, wenn die Batteriespannung unter dem zweiten Schwellenwert ist.

3. Vorrichtung nach Anspruch 1 oder Anspruch 2, wobei das Steuermodul (17) konfiguriert ist, um ein Ladestromsteuersignal auszugeben.

4. Vorrichtung nach Anspruch 3, wobei ein Ladestrom, der durch die Ladeeinheit (12) ausgegeben wird, um die Batterie (11) zu laden, zumindest teilweise von dem Ladestromsteuersignal abhängt und wobei die Ladestromausgabe bei Fehlen des Ladestromsteuersignals optional auf einen Standardwert eingestellt ist.

5. Vorrichtung nach Anspruch 3 oder Anspruch 4, wobei das Ladestromsteuersignal zumindest teilweise von einer Temperatur der Batterie abhängig ist.

6. Vorrichtung nach einem der Ansprüche 1 bis 5, wobei:
das Steuermodul (17) konfiguriert ist, um das erste Steuersignal basierend zumindest teilweise auf einer bestimmten Temperatur der Batterie in den Ladefreigabezustand oder den Ladesperrzustand einzustellen; und/oder
das Steuermodul (17) konfiguriert ist, um das erste Steuersignal in den Ladesperrzustand einzustellen, wenn die Vorrichtung verwendet wird, um ein Aerosol zu erzeugen.

7. Vorrichtung nach einem der Ansprüche 1 bis 6, ferner umfassend eine Widerstandsanordnung (32), wobei die Widerstandsanordnung konfiguriert ist, um das erste Steuersignal von dem Steuermodul zu empfangen und um ein Konstantstromquellensignal von der Ladeeinheit zu empfangen, wobei das Konstantstromquellensignal eine Spannung innerhalb der Widerstandsanordnung abhängig von dem ersten Steuersignal erzeugt, wobei die Spannung durch die Ladeeinheit verwendet wird, um zu bestimmen, ob Laden der Batterie zuzulassen ist, wobei die Widerstandsanordnung optional Folgendes umfasst:
einen ersten Widerstand (34) mit einem ersten Anschluss, der konfiguriert ist, um das Konstantstromquellensignal zu empfangen, und einem zweiten Anschluss, der mit Masse verbunden ist; und
einen zweiten Widerstand (35) mit einem ersten Anschluss, der konfiguriert ist, um das Konstantstromquellensignal zu empfangen, und einem zweiten Anschluss, der konfiguriert ist, um das erste Steuersignal zu empfangen.

8. Vorrichtung nach einem der Ansprüche 1 bis 7, ferner umfassend einen Regler (16), der konfiguriert ist, um eine Betriebsspannung zu regeln, die der Schaltung (13) bereitgestellt wird.

9. Vorrichtung nach einem der Ansprüche 1 bis 8, wobei das Steuermodul (17) konfiguriert ist, um eine Aerosolerzeugungsschaltung der Vorrichtung zu steuern.

10. Vorrichtung nach einem der Ansprüche 1 bis 9, ferner umfassend die Batterie.

11. Nicht brennbares Aerosol-Bereitstellungssystem, umfassend eine Vorrichtung nach einem der Ansprüche 1 bis 10, wobei das Aerosol-Bereitstellungssystem optional konfiguriert ist, um einen entfernbaren Artikel zu empfangen, der ein aerosolerzeugendes Material umfasst.

12. Verfahren, umfassend:
Entkoppeln (22) einer Schaltung (13) von einer Batterie (11) eines nicht brennbaren Aerosol-Bereitstellungssystems in dem Fall, dass die Batteriespannung unter einem ersten Schwellenwert ist, wobei die Schaltung ein Steuermodul umfasst;
Verhindern, dass die Batterie geladen wird, wenn die Batteriespannung unter einem zweiten Schwellenwert ist, wobei der zweite Schwellenwert niedriger als der erste Schwellenwert ist;
Verwenden des Steuermoduls, um ein erstes Steuersignal zu erzeugen (24), wobei das erste Steuersignal einen Ladefreigabezustand und einen Ladesperrzustand aufweist; und
Laden (26) der Batterie, es sei denn, das erste Steuersignal weist den Ladesperrzustand auf

13. Verfahren nach Anspruch 12, wobei das Steuersignal in dem Fall, dass die Schaltung von der Batterie entkoppelt ist, weder den Ladefreigabezustand noch den Ladesperrzustand aufweist.

14. Verfahren nach Anspruch 12 oder Anspruch 13, ferner umfassend permanentes Entkoppeln der Schaltung von der Batterie in dem Fall, dass die Batteriespannung unter dem zweiten Schwellenwert ist.

15. Verfahren nach einem der Ansprüche 12 bis 14, ferner umfassend:
Erzeugen einer Spannung innerhalb einer Widerstandsanordnung (32) abhängig von dem ersten Steuersignal; und
Bestimmen, ob die Batterie abhängig von der erzeugten Spannung zu laden ist.

## Revendications

1. Appareil destiné à un système de fourniture d'aérosol non combustible comprenant : une unité de charge (12) conçue pour charger une batterie (11) dudit système de fourniture d'aérosol ;
un circuit (13) comprenant un module de commande (17), ledit module de commande émettant un premier signal de commande comportant un état d'activation de charge et un état de désactivation de charge ; et
un module de protection (15) conçu pour découpler le circuit de ladite batterie lorsque la tension de la batterie est inférieure à un premier niveau de seuil,
dans lequel :
l'unité de charge (12) est conçue pour charger la batterie (11) à moins que le premier signal de commande ne comporte l'état de désactivation de la charge ; et
le module de protection (15) est conçu pour empêcher le chargement de la batterie lorsque la tension de la batterie est inférieure à un second niveau de seuil, ledit second niveau de seuil étant inférieur au premier niveau de seuil.

2. Appareil selon la revendication 1, ledit circuit de protection (15) étant conçu pour découpler en permanence le circuit (13) de ladite batterie lorsque la tension de la batterie est inférieure au second niveau de seuil.

3. Appareil selon la revendication 1 ou la revendication 2, ledit module de commande (17) étant conçu pour émettre un signal de commande de courant de charge.

4. Appareil selon la revendication 3, l'émission de courant de charge par l'unité de charge (12) pour charger la batterie (11) dépendant, au moins en partie, du signal de commande de courant de charge, et ladite sortie de courant de charge étant éventuellement fixée à un niveau par défaut en l'absence du signal de commande de courant de charge.

5. Appareil selon la revendication 3 ou la revendication 4, ledit signal de commande de courant de charge dépendant, au moins en partie, de la température de ladite batterie.

6. Appareil selon l'une quelconque des revendications 1 à 5 :
ledit module de commande (17) étant conçu pour fixer le premier signal de commande sur l'état d'activation de charge ou sur l'état de désactivation de charge sur la base, au moins en partie, d'une température déterminée de ladite batterie ; et/ou
ledit module de commande (17) étant conçu pour fixer le premier signal de commande sur l'état de désactivation de charge lorsque l'appareil est utilisé pour générer un aérosol.

7. Appareil selon l'une quelconque des revendications 1 à 6, comprenant en outre un agencement de résistances (32), ledit agencement de résistances étant conçu pour recevoir le premier signal de commande du module de commande et pour recevoir un signal de source de courant constant de l'unité de charge, ledit signal de source de courant constant générant une tension dans l'agencement de résistances dépendant dudit premier signal de commande, ladite tension étant utilisée, par ladite unité de charge, pour déterminer s'il faut permettre la charge de ladite batterie, ledit agencement de résistances comprenant éventuellement :
une première résistance (34) comportant une première borne conçue pour recevoir le signal de source de courant constant et une seconde borne connectée à la masse ; et
une seconde résistance (35) comportant une première borne conçue pour recevoir le signal de source de courant constant et une seconde borne conçue pour recevoir le premier signal de commande.

8. Appareil selon l'une quelconque des revendications 1 à 7, comprenant en outre un régulateur (16) conçu pour réguler la tension de fonctionnement délivrée audit circuit (13).

9. Appareil selon l'une quelconque des revendications 1 à 8, ledit module de commande (17) étant conçu pour commander un circuit de génération d'aérosol dudit appareil.

10. Procédé selon l'une quelconque des revendications 1 à 9, comprenant en outre ladite batterie.

11. Système de fourniture d'aérosol non combustible comprenant un appareil selon l'une quelconque des revendications 1 à 10, ledit système de fourniture d'aérosol étant éventuellement conçu pour recevoir un article amovible comprenant un matériau de génération d'aérosol.

12. Procédé comprenant :
le découplage (22) d'un circuit (13) d'une batterie (11) d'un système de fourniture d'aérosol non combustible dans le cas où la tension de la batterie est inférieure à un premier niveau de seuil, ledit circuit comprenant un module de commande ;
le fait d'empêcher le chargement de la batterie lorsque la tension de la batterie est inférieure à un second niveau de seuil, ledit second niveau de seuil étant inférieur au premier niveau de seuil ;
l'utilisation dudit module de commande pour générer (24) un premier signal de commande, le premier signal de commande comportant un état d'activation de charge et un état de désactivation de charge ; et
la charge (26) de la batterie à moins que le premier signal de commande ne comporte l'état de désactivation de la charge.

13. Procédé selon la revendication 12, ledit signal de commande ne comportant ni l'état d'activation de charge ni l'état de désactivation de charge dans le cas où le circuit est découplé de la batterie.

14. Procédé selon la revendication 12 ou la revendication 13, comprenant en outre le découplage permanent du circuit de ladite batterie dans le cas où la tension de la batterie est inférieure au second niveau de seuil.

15. Procédé selon l'une quelconque des revendications 12 à 14, comprenant en outre :
la génération d'une tension dans un agencement de résistances (32) dépendant dudit premier signal de commande ; et
la détermination pour savoir s'il faut charger la batterie en fonction de ladite tension générée.
